# EUROPEAN PATENT SPECIFICATION

(11) **EP 1 659 715 B1**
(45) Date of publication and mention of the grant of the patent: **23.05.2012**
(21) Application number: 05292420.6
(22) Date of filing: 15.11.2005
(51) Int. Cl.: H04H 60/39

(54) **Digital broadcast method, apparatus and data structure**
Digitales Rundfunkverfahren, -sendeeinrichtung und Datenstruktur
Procédé, appareil de radiodiffusion numérique et structure de données

(30) Priority: 17.11.2004 KR 2004093898
(43) Date of publication of application: 24.05.2006
(73) Proprietor: LG Electronics, Inc., Seoul 150-875 (KR)
(72) Inventor: Moon, Kyoung Soo, Umyeon-do Seocho-gu Seoul 150-875 (KR)
(74) Representative: Loisel, Bertrand

(56) References cited:
- "Radio Broadcasting Systems; Digital Audio Broadcasting (DAB) to mobile, portable and fixed receivers; ETSI EN 300 401" ETSI STANDARDS, LIS, SOPHIA ANTIPOLIS CEDEX, FRANCE, vol. BC, no. V1.3.3, 1 May 2001 (2001-05-01), XP014001360 ISSN: 0000-0001
- "Digital Audio Broadcasting (DAB); XML Specification for DAB Electronic Programme Guide (EPG); ETSI TS 102 818" ETSI STANDARDS, LIS, SOPHIA ANTIPOLIS CEDEX, FRANCE, vol. BC, no. V1.1.1, 1 December 2002 (2002-12-01), XP014007005 ISSN: 0000-0001
- "Digital Audio Broadcasting (DAB); Guidelines and rules for implementation and operation; Part 2: System features; ETSI TR 101 496-2" ETSI STANDARDS, LIS, SOPHIA ANTIPOLIS CEDEX, FRANCE, vol. BC, no. V1.1.2, 1 May 2001 (2001-05-01), XP014004881 ISSN: 0000-0001

## Description

### BACKGROUND OF THE INVENTION

### Field of the Invention

The present invention relates to a digital broadcast system, and more particularly to a method and apparatus for providing an Electronic Program Guide (EPG) service using a digital multimedia broadcast service, and a data structure thereof.

### Discussion of the Related Art

A Digital Audio Broadcasting (DAB) standard widely used in Europe to provide a user with a digital audio broadcast service provides the user with high-quality audio data (i.e., high-quality sound) and various additional services. The DAB standard supports not only MPEG-1 audio service but also MPEG-2 audio service to provide the user with high-quality audio data, and provides the user with traffic information and Web data.

With the extension of the above-mentioned DAB standard, a Digital Multimedia Broadcasting (DMB) service has been established in Korea to provide users with audio data and video data. According to the above-mentioned DMB service, the video data is based on an H.264 standard to provide the user with a video service based on the DAB service, and the audio data is based on a Bit Sliced Arithmetic Coding (BSAC) standard to provide the user with an audio service based on the DAB service.

In this case, the video data and the audio data are configured in the form of a Transport Stream (TS) by an MPEG-2 system, and are multiplexed in the form of the Transport Stream (TS) via the MPEG-2 system. The DMB service can provide the user with even a video service using the MPEG-4 standard and the MPEG-2 standard.

In this way, the DMB service capable of implementing a multimedia broadcast service by providing the user with even the video service is based on the above-mentioned DAB service.

Although the above-mentioned DAB standard has been designed to provide title information of a current broadcast program via Service Information (SI) of the DAB system, it is unable to recognize program information indicative of the next broadcast program following the current broadcast program using only the above-mentioned SI.

In other words, the above-mentioned DAB system cannot recognize Electronic Program Guide (EPG) information using only the SI. In order to obviate the above-mentioned problem, the DAB service enables the EPG information to be transmitted in the form of XML data.

However, if the parsing or presentation of the above-mentioned XML data is performed to show a DAB system or a DAB terminal the EPG information, it should be noted that unexpected limitations occur in processor ability and memory capacitance, etc. Radio Broadcasting Systems; Digital Audio Broadcasting (DAB) to mobile, portable and fixed receivers (ETSI EN 300 401" vol. BC, no.V1.3.3, 1 May 2001) establishes a broadcasting standard for the Digital Audio Broadcasting (DAB) system designed for delivery of high-quality digital audio programme and data services for mobile, portable and fixed reception form terrestrial or satellite transmitters in the Very high Frequency (VHF)/Ultra High Frequency (UHF) frequency bands as well as for distribution through cable networks.
Digital Audio Broadcasting (DAB); XML Specification for DAB Electronic Programme Guide (EPG); ETSI TS 102 818 (vol. BC, no, no.V1.1., 1 December 2002) defines the XML schema data model for an Electronic Programme Guide (EPG) for Eureka-147 Digital Audio Broadcasting (DAB).

### SUMMARY OF THE INVENTION

Accordingly, the present invention is directed to a digital broadcast method, a digital broadcast apparatus, and a data structure thereof that substantially obviate one or more problems due to limitations and disadvantages of the related art.

An object of the present invention is to provide an apparatus and method for providing EPG information, such that a user can recognize start and end times of current and next broadcast programs using only Service Information (SI).

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a data structure is defined according to claim 1, a digital broadcast method is provided comprising the steps as defined in claim 2 and a digital broadcast apparatus is also provided according to claim 4.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a DAB service system according to the present invention;

FIGS. 2~3 are conceptual diagrams illustrating methods for detecting Sid, SCId, SubChId, and SCIdS information according to the present invention;

FIG. 4 is a configuration diagram illustrating an "FIG 1/4 field" including a service component label according to the present invention;

FIG. 5 is a configuration diagram illustrating a service component trigger field according to the present invention;

FIG. 6 is a configuration diagram illustrating an "FIG 1/4 field" including a service component label according to the present invention;

FIGS. 7a~7c are conceptual diagrams illustrating methods for transmitting EPG information using an "EvtId" field according to the present invention; and

FIG. 8 is a block diagram illustrating a DAB (or DMB) decoder according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

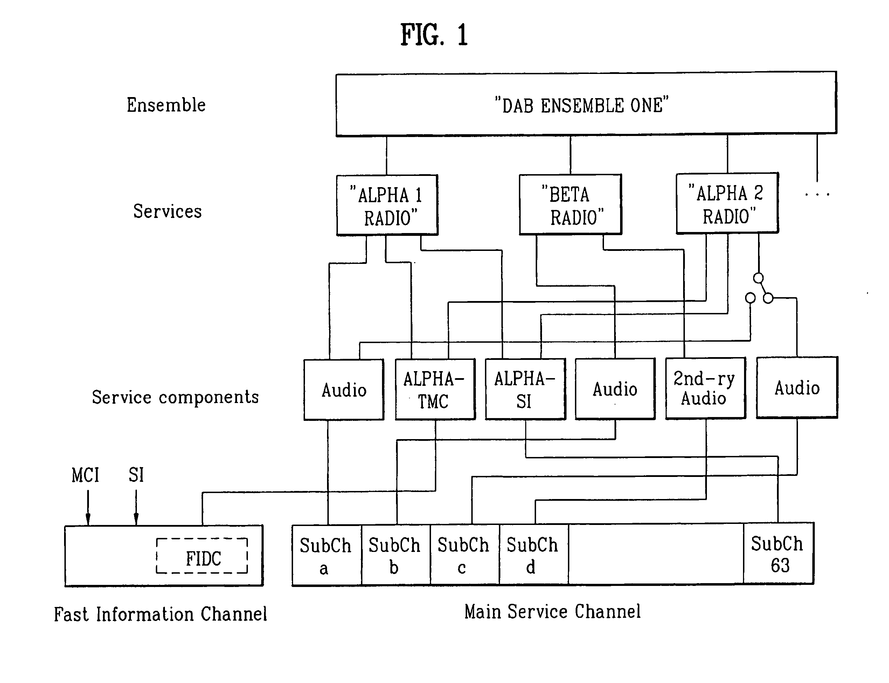

FIG. 1 is a block diagram illustrating a DAB service system according to the present invention.

Referring to FIG. 1, the uppermost structure of the DAB service is indicative of an ensemble. A plurality of services (e.g., alpha-1 radio, beta radio, and alpha-2 radio, etc.) are contained in a single ensemble. In other words, a broadcast station includes a plurality of services indicative of a plurality of broadcast channels in a single ensemble.

A plurality of service components are contained in individual services, for example, an audio stream, additional information such as traffic information, and a DMB stream configured by combination of video and audio data in a DMB system.

The above-mentioned additional information such as the traffic information from among the above-mentioned service components is loaded on a Fast Information Data Channel (FIDC), and the remaining service components other than the above-mentioned additional information are loaded on a Main Service Channel (MSC) and are then transmitted.

A user can select one of various services contained in a single ensemble, and can select desired data from among service components contained in the selected service.

For example, if the user selects the "ALPHA-1 RADIO" service, the user can receive a variety of service components of the above-mentioned "ALPHA-1 RADIO" service, i.e., audio information, traffic information (ALPHA-TMC (Traffic Message Channel)), and additional service information (ALPHA-SI (Service Information)), such that the user can select only one of the above-mentioned service components.

For example, the audio service component indicative of a primary service component of the "ALPHA-1 RADIO" service is transmitted via a sub-channel (SubCh) "a" of the main service channel (MSC), the traffic information (ALPHA-TMC) is transmitted via the Fast Information Data Channel (FIDC) contained in the Fast Information Channel (FIC), and the service information is transmitted via a sub-channel (SubCh) "63" of the MSC.

In the meantime, the SI transmitted via the FIC of the DAB provides additional information associated with service(s). The additional information includes information associated with a service structure, individual ensembles, services, labels associated with service components, start and end times of the service components, and service category information, etc.

In this case, a broadcast station may transmit name information of a broadcast channel to a service label, and may transmit a program title to a primary service component label. For example, an ensemble label of the Korean DMB broadcast service is set to "SBS DMB", and a service label of the Korean DMB broadcast service is set to "RADIO 1", such that data transmission is performed using the above-mentioned ensemble and service labels.

The program title is contained in a service component label, such that the service component label equipped with the program title is transmitted to a reception end. Therefore, the reception end can recognize the program title by referring to the service component label.

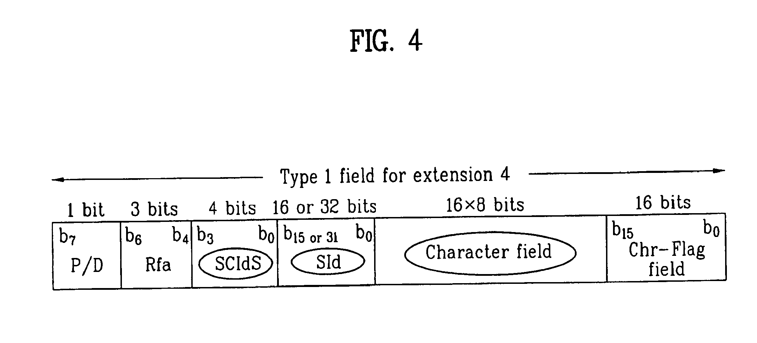

The above-mentioned process for searching for the service component label is changed according to individual modes (i.e., a stream mode and a packet mode), and is basically recognized by an SId (Service Identifier) and an SCIdS (Service Component Identifier within Service) of the FIG 1/4 (Fast Information Group, Type 1 field for extension 4) field.

In this case, the FIG (Fast Information Group) is indicative of a group of data units for use in a single application in the FIC (Fast Information Channel). In other words, the FIC includes a plurality of FIBs (Fast Information Blocks), and a plurality of FIGs are contained in a single FIB.

The above-mentioned FIG includes 8 different types corresponding to individual applications. Therefore, the "FIG 1/4" field corresponds to a "Type 1" including label information from among the above-mentioned 8 types, and indicates that a value of extension is 4.

The above-mentioned extension is denoted by a binary natural number, and is adapted to identify individual fields within individual types. For reference, "FIG Type 1" can be identified by 8 extensions.

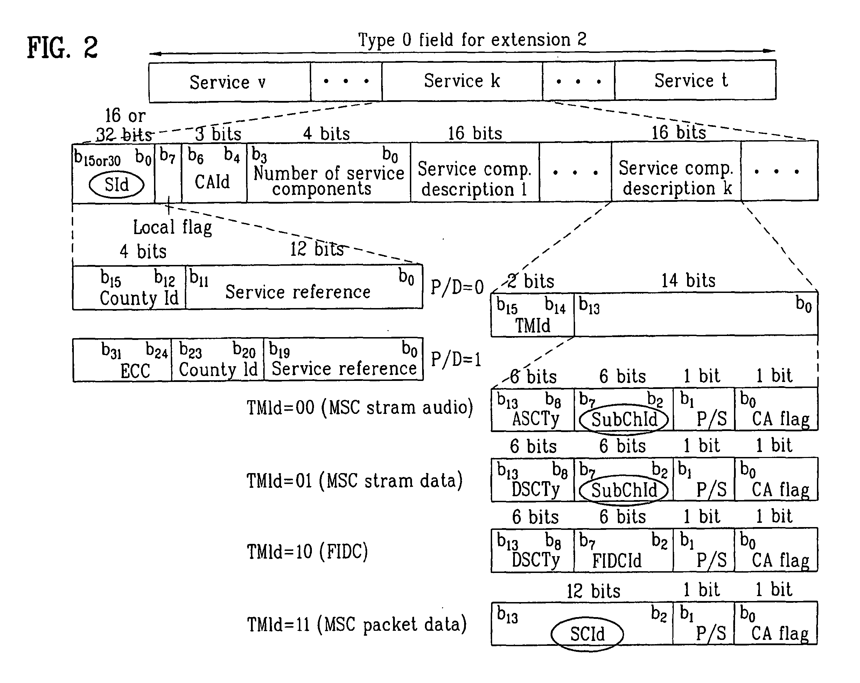

Therefore, SId and SCIdS information of the "FIG 1/4" field must be recognized to search for the above-mentioned service component label. Specifically, in order to recognize the above-mentioned SCIdS information, either SId and SCId (Service Component Identifier) information or SID and SubChID (Sub Channel Identifier) information must firstly be recognized, and the SCIdS information must then be recognized from the SIDd and SCId information or the SId and SubChId information. A detailed description thereof will hereinafter be described with reference to FIGS. 2~3.

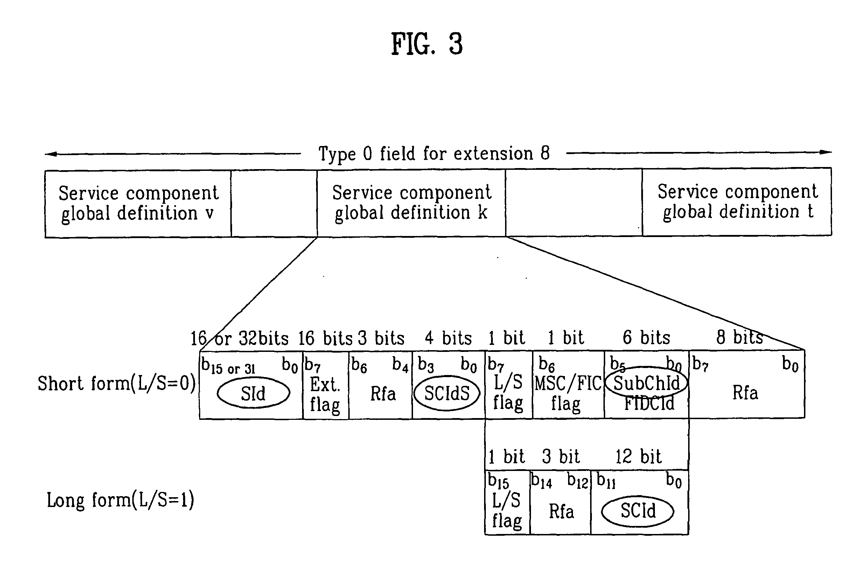

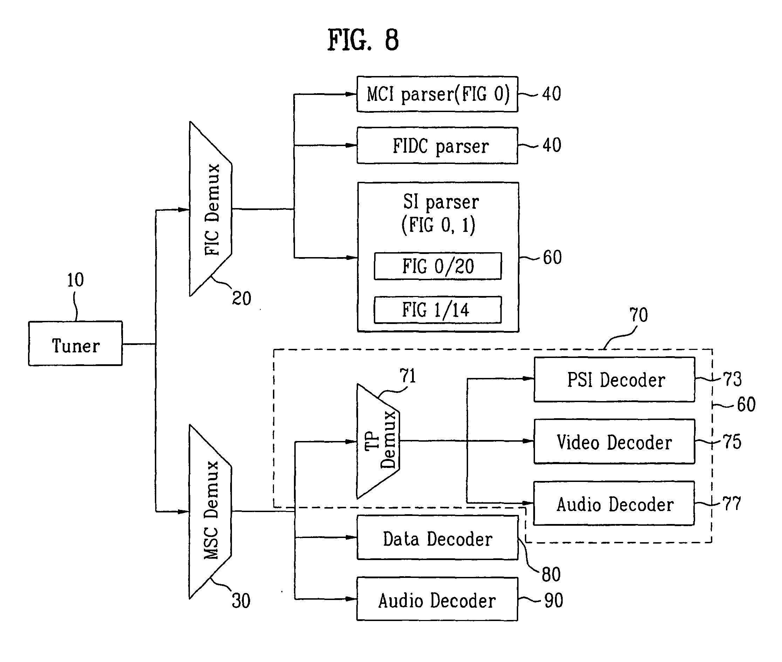

FIGS. 2~3 are conceptual diagrams illustrating methods for detecting Sid, SCId, SubChId, and SCIdS information according to the present invention. FIG. 2 is a configuration diagram illustrating a basic service structure and a service component definition structure (FIG 0/2) from among service organizations according to the present invention. FIG. 3 is a configuration diagram illustrating a global definition structure (FIG 0/8) of a service component according to the present invention.

Referring to FIG. 2, the "FIG 0/2" (Type 0 field for extension 2) field defines a basic service structure. In this case, the "FIG Type 0" field is indicative of a field for partially defining the MCI and the SI from among FIG applications.

A single service field (Service K) from among various services of the above-mentioned "FIG 0/2" field includes the "SId" field and the "Service Comp. description" field.

The "Service Comp. description" field has different structures according to the stream mode or the packet mode. The stream mode is classified into a first field (MSC stream audio) under a predetermined condition of "TMId (Transport Mechanism Identifier) = 00", and a second field (MSC stream data) under a predetermined condition of "TMId=01". Each field includes the "SubChId (Sub Channel Identifier)" field. The packet mode includes a field (MSC packet data) under a predetermined condition of "TMId=11". The above-mentioned "MSC packet data" field includes the "SCId" field.

Since the above-mentioned stream mode transmits a single service component via a single sub-channel, it includes "SubChId" information. Since the above-mentioned packet mode transmits a plurality of service components via a single sub-channel, it includes "SCId" information.

Therefore, if a current mode is equal to the packet mode (i.e., if the MSC packet data denoted by "TMId=11" is provided), the packet mode can acquire ID (SCId) information of a service component via the "SCId" field contained in a corresponding field.

If a current mode is equal to the stream mode (i.e., if the MSC stream audio denoted by "TMId=00" is provided or the MSC stream data denoted by "TMID=01" is provided), the packet mode can recognize ID (SubChId) information of a sub-channel for transmitting a service component via the "SubChId" field contained in a corresponding field.

In this way, if the above-mentioned SId and SCId information or the above-mentioned SId and SubChId information is recognized, the parsing of the "FIG 0/8" (Type 0 field for extension 8) field is performed, such that the "SCIdS" information can be recognized as shown in FIG. 3.

Referring to FIG. 3, if the L/S field is set to zero, this means a short form, such that the L/S field of zero is indicative of the stream mode. If the L/S field is set to 1, this means a long form, such that the L/S field of 1 is indicative of a packet mode.

If a current mode is determined to be the stream mode, the SCIdS information can be recognized by the above-mentioned SId and SubChId information. If a current mode is determined to be the packet mode, the SCIdS information can be recognized by the above-mentioned SId and SCId information.

After recognizing the SCIdS information using the above-mentioned method, title information of a current broadcast program can be recognized by the "FIG 1/4 field" equipped with a service component label, and a detailed description thereof will hereinafter be described with reference to FIG. 4.

FIG. 4 is a configuration diagram illustrating an "FIG 1/4 field" including a service component label according to the present invention.

Referring to FIG. 4, the FIG 1/4 (Type 1 field for extension 4) field includes an "SCIdS" field, an "SId" field, and a "Character" field.

Therefore, service component label information contained in the character field of the "FIG 1/4" field corresponding to the above-mentioned SCIdS and SId information can be acquired.

The FIB supplied from the DAB SI can receive a title of a current broadcast program via a service component label.

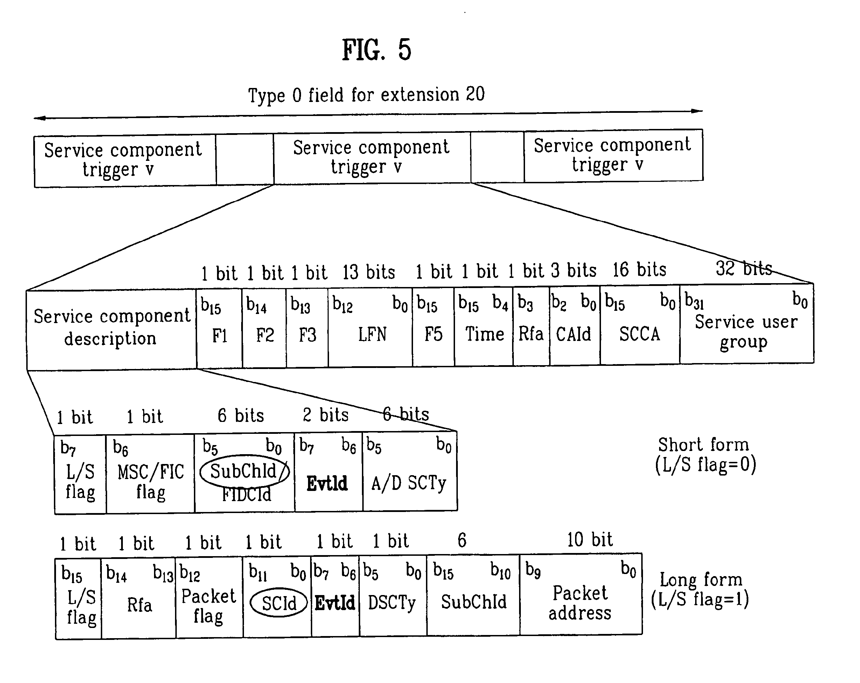

The present invention can provide not only the title information of a current broadcast program but also EPG information such as the next broadcast program information following the current broadcast program, and a detailed description thereof will hereinafter be described with reference to FIGS. 5~6.

FIG. 5 is a configuration diagram illustrating a service component trigger field according to the present invention.

Referring to FIG. 5, a service component trigger is recorded in the FIG 0/20 (Type 0 field for extension 20) field, and is used as a field indicative of start and end times of a service component recognized as "SubChId" or "SCId".

In other words, if the "F2" field is set to zero, the F2 field of zero is indicative of a start time of a service component in the "Time" field. If the "F2" field is set to "1", the F2 field of 1 is indicative of an end time of a service component in the "Time" field.

If the "L/S flag" field of the "Service Component description" field is set to zero, this means a short form, such that the "L/S flag" field of zero is indicative of a service component transmitted according to the stream mode, and includes the "SubChId" field. If the "L/S flag" field of the "Service Component description" field is set to "1", this means a long form, such that the "L/S flag" field of 1 is indicative of a service component transmitted according to the packet mode, and includes the "SCId" field.

The present invention is characterized in that it includes the "EvtId (Event Identifier" field in the service component trigger field. The "EvtID" field recognizes a program of the primary service component, and is represented in the form of 2 bits, such that it can transmit a maximum of 4 program information units using individual 2-bit values (i.e., "00", "01", "10", "11"). In this case, it should be noted that the term "event" is indicative of a broadcast program unit executed in a single service.

The above-mentioned "EvtId" field is contained in the service component trigger field, such that it informs a user of start and end times of current and next broadcast programs.

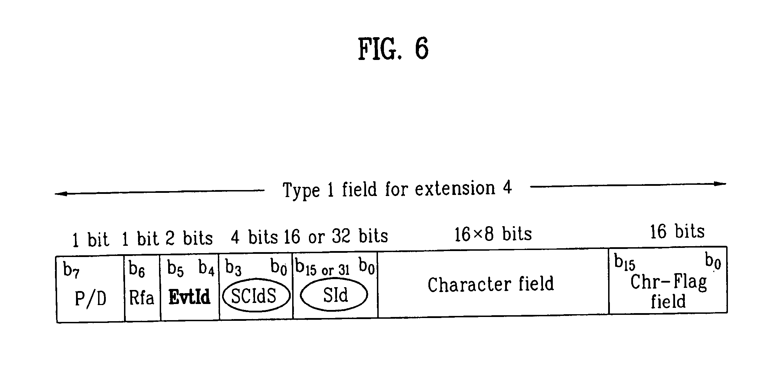

In the meantime, the "EvtId" field according to the present invention is also contained in the service component label (FIG 1/4) indicative of program title information, and a detailed description thereof will hereinafter be described with reference to FIG. 6.

FIG. 6 is a configuration diagram illustrating an "FIG 1/4 field" including a service component label according to the present invention.

Compared with the structure of FIG. 4, the "FIG 1/4" field shown in FIG. 6 uses 2 bits from among the Rfa (Reserved for future addition) field of FIG. 4 as the "EvtId" field.

In other words, the "FIG 1/4" field of FIG. 6 further includes the "EvtId" field, such that it can recognize programs of a primary service component. 2 bits are assigned to the above-mentioned "EvtId" field, such that the "EvtId field" includes four values ("00", "01", "10", and "11"). Therefore, the maximum number of program information units capable of simultaneously transmitted is 4.

A user can recognize not only title information of a current broadcast program but also title information of the next broadcast program by referring to the "EvtId" field contained in the "FIG 1/4" field.

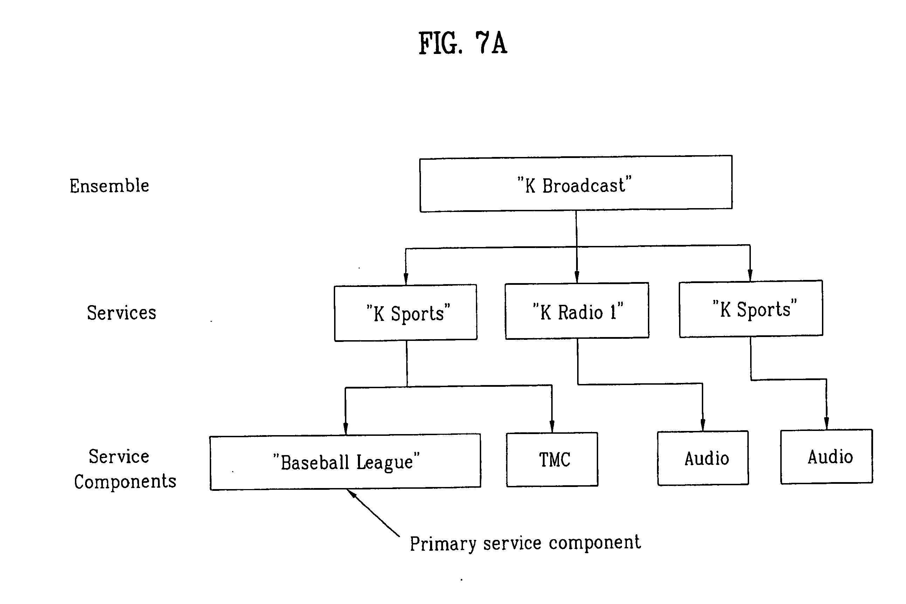

A method for transmitting EPG information (for example, start and end times of individual programs, and title information of the programs) using the above-mentioned "EvtId" field according to the present invention will hereinafter be described with reference to FIGS. 7a~7c.

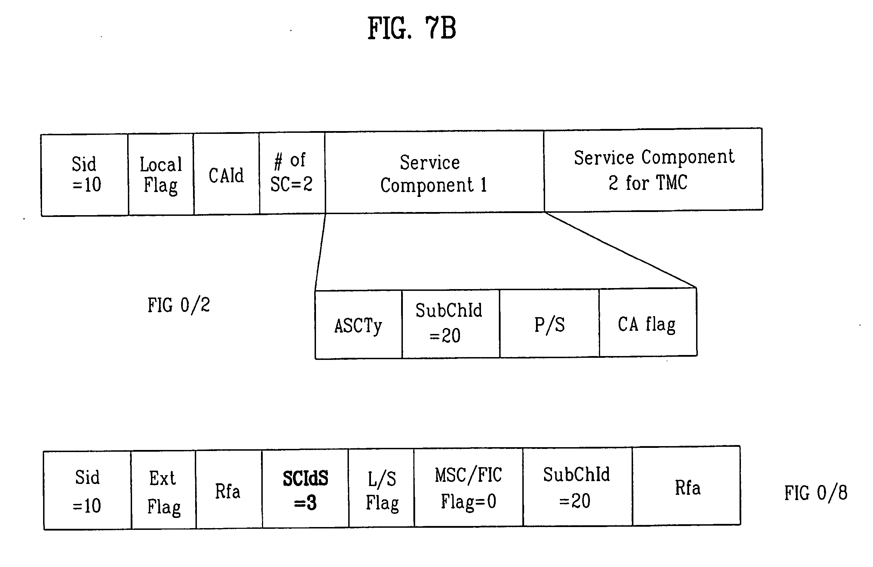

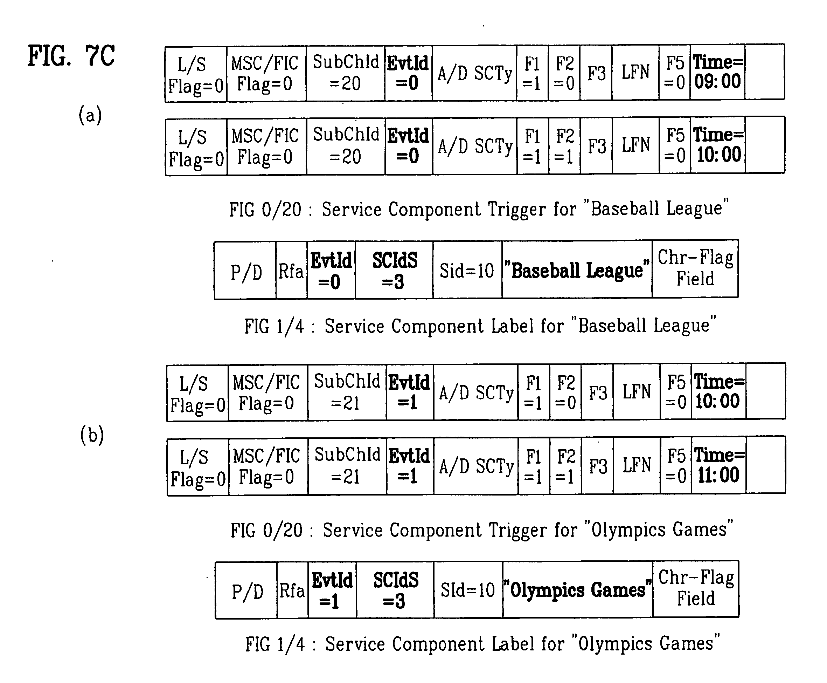

FIGS. 7a~7c are conceptual diagrams illustrating methods for transmitting EPG information using an "EvtId" field according to the present invention. In more detail, FIG. 7a shows a service structure of a specific broadcast station "K", FIG. 7b shows a process for searching for the SCIdS information of the "Ksports" channel from among various services of the above-mentioned broadcast station "K", and FIG. 7c shows program schedule information associated with the "EvtId" field.

The service structure of the broadcast station "K" shown in FIG. 7 can be acquired on the assumption that programming information of the above-mentioned broadcast station "K" is as follows:

Broadcast station: "K Broadcast"
Broadcast channel:
"K Sports" → SId = 10
"K Radio 1" → SId = 11
"K Radio 2" → SId = 12
Programming Information of "K Sports" Channel: The following information is indicative of Primary service component(s)
09:00~10:00: "Baseball League" → SubChId=20, EvtId=0, SCIdS=3
10:00~11:00: "Olympic Games" → SubChId=21, EvtId=1, SCIdS=3
11:00~11:10: "Sports News" → SubChId=22, EvtId=2, SCIdS=3
11:10~12:00: "Football Match" → SubChId=23, EvtId=3, SCIdS=3

If the broadcast station "K" has the above-mentioned programming information and a current time is 9:30, a current broadcast program is "Baseball League".

In this case, provided that all service components other than the TMC from among service components of FIG. 7a are transmitted via the stream mode, and 2 program information units from among 4 program information units transmitted via the "K Sports" channel are transmitted, a predetermined FIG is required. The FIG is shown in FIGS. 7b~7c.

FIG. 7b is a configuration diagram illustrating the "FIG 0/2" field and the "FIG 0/8" field, and shows a process for searching for the SCIdS information of the "K Sports" channel. In more detail, the SId and SubChId information can be recognized by the FIG 0/2 field, and the SCIdS information is detected from among a corresponding FIG 0/8 field.

Therefore, as can be seen from FIG. 7b, a user can recognize that a current channel is indicative of "SId=10" (i.e., "K Sports" channel) and "SubChId=20" (i.e., "Baseball League") using the "FIG 0/2" field. In this way, the user can recognize that the SCIdS information of the FIG 0/8 field is 3 (i.e., SCIdS=3) on the basis of the above-mentioned information "SId=10" and "SubChId=20".

In this case, if the "MSC/FIC Flag" field has a specific value of zero, the next field includes the SubChId information. If the "MSC/FIC Flag" field has a specific value of 1, the next field includes a Fast Information Data Channel Identifier (FIDCId) value.

Therefore, data transmitted via the stream mode is transmitted via a Main Service Channel (MSC) instead of the FIDC (Fast Information Data Channel), such that the value of "MSC/FIC Flag" field is zero. For reference, data transmitted via the FIDC includes paging data, TMC (Traffic Message Channel) data, and EWS (Emergency Warning Systems) data.

After recognizing the above-mentioned SCIds value, the user can recognize program schedule information using the "EvtId" field as shown in FIG. 7c.

As can be seen from (a) of FIG. 7c, if the value of the F2 field in the "FIG 0/20" field is equal to zero, the "Time" field is indicative of a program start time, such that it can be recognized that a start time of a program denoted by "EvtId=0" is 09:00.

If the value of the F2 field of the "FIC 0/20" field is equal to "1", the "Time" Field is indicative of a program end time, such that it can be recognized that an end time of a program denoted by "EvtId=0" is 10:00.

In addition, the user can recognize that a service component label of the program denoted by "EvtId=0", i.e., a program title, is indicative of "Baseball League" by referring to the FIG 1/4 field including the pre-recognized "SCIdS=3" field and the "EvtId=0" field.

In this way, as can be seen from (b) of FIG. 7c, it can be recognized that a start time of the "EvtId=1" program in the "FIG 0/20" field is 10:00, and an end time of the "EvtId=1" program is 11:00. It can be recognized that a title of a specific program denoted by "SCIdS=3" and "EvtId=1" is "Olympic Games".

As described above, the present invention introduces specific information "EvtId", which is indicative of program information varying with time in a service component, into the "FIG 0/20" field and the "FIG 1/4" field, such that it can provide start and end times of a program and title information of the program, resulting in the implementation of the EPG service.

FIG. 8 is a block diagram illustrating a DAB (or DMB) decoder according to the present invention.

Referring to FIG. 8, data received via the tuner 10 is demultiplexed by an FIC demultiplexer (Demux) 20 according to characteristic information of the data, and MSC data is demultiplexed by the MSC demultiplexer (Demux) 30 according to characteristic information of the MSC data.

Output data of the FIC demultiplexer 10 is parsed by an MCI parser 40, an FIDC parser 50, and an SI parser 60 according to characteristic information of the output data.

In this case, the SI parser 60 parses the FIG 0/20 field and the FIG 1/4 field, each of which includes the "EvtId" field, such that a program start time, a program end time, and a program title according to the "EvtId" field can be recognized.

Output data of the MSC demultiplexer 30 is decoded by a data decoder 80 and an audio decoder 90. In this case, if a system is indicative of a DMB system, the DMB system further includes an additional block 70 for decoding data transmitted in the form of a TS (Transport Stream).

In the meantime, the present invention can also be applied to the DMB system in the same manner as in the DAB system. In other words, a DMB video service for transmitting data in the form of an MPEG-2 TS can display program information on a DMB terminal according to the inventive method of the present invention.

As apparent from the above description, a method and apparatus for receiving digital broadcast data according to the present invention includes "EvtId" information in a "FIG" field of a DAB SI, such that an EPG service is made available using the DAB SI.

It will be apparent to those skilled in the art that various modifications and variations can be made in the present invention without departing from the scope of the invention. Thus, it is intended that the present invention covers the modifications and variations of this invention provided they come within the scope of the appended claims and their equivalents.

## Claims

1. A data structure comprising Service Information, SI, data related to a service and a service component, the SI data being included in a Fast Information Channel, FIC, the data structure comprising:
an Event Identifier, EvtId, field for identifying an event, wherein the term event is indicative of a broadcast program varying with time,
wherein the EvtId field is contained in a "FIG 0/20" (Fast Information Group, Type 0 field for extension 20) field and a "FIG 1/4" (Fast Information Group, Type 1 field for extension 4) field of the SI data,
wherein, if an "F2" field of the "FIG 0/20" field is set to "0", the corresponding "TIME" field of said "FIG 0/20" field records the start time of the event, wherein, if the "F2" field is set to "1", the "TIME" field records the end time of the event, and
wherein the "Character" field of the "FIG 1/4" field records the title of the event.

2. A method for receiving a digital broadcast signal comprising a Main Service Channel, MSC, and a Fast Information Channel, FIC, the FIC including Service Information, SI, data related to a service and a service component, the method comprising the steps of:
a) parsing a "FIG 0/20" field included in the SI data and detecting a start or end time of an event, wherein the term event is indicative of a broadcast program varying with time,
wherein the "FIG 0/20" field includes an Event Identifier, EvtId, field for identifying the event, wherein the start time of the event is detected from a "TIME" field of the "FIG 0/20" field when the corresponding "F2" field of the said "FIG 0/20" field is set to "0", and
wherein the end time of the event is detected from the "TIME" field when the "F2" field is set to "1"; and
b) parsing a "FIG 1/4" field included in the SI data and detecting a title of the event,
wherein the "FIG 1/4" field includes the EvtId field for identifying the event, and
wherein the title of the event is detected from the "Character" field of the "FIG 1/4" field.

3. The method according to claim 2, wherein the service component uses different identification methods according to stream mode information indicative of a stream mode and a packet mode.

4. A digital broadcast receiving apparatus for receiving a digital broadcast signal comprising a Main Service Channel, MSC, and a Fast Information Channel, FIC, the FIC including Service Information, SI, data related to a service and a service component, the digital broadcast apparatus comprising:
an FIC demultiplexer (20) for demultiplexing data received via the FIC into Multiplexed Configuration Information, MCI, data, Fast Information Data Channel, FIDC, data, and SI data; and an SI parser (60) for parsing a "FIG 0/20" field included in the SI data to detect a start time or an end time of an event and parsing a "FIG 1/4" field included in the SI data to detect a title of the event, wherein the term event is indicative of a broadcast program varying with time,
wherein the "FIG 0/20" field and the "FIG 1/4" field include an event identifier EvtId field for identifying the event,
wherein the start time of the event is detected from a "TIME" field of the "FIG 0/20" field when the corresponding "F2" field of said "FIG 0/20" field is set to "0",
wherein the end time of the event is detected from the "TIME" field when the "F2" field is set to "1", and
wherein the title of the event is detected from a "Character" field of the "FIG 1/4" field.

## Patentansprüche

1. Datenstruktur, welche Dienstinformationsdaten (SI-Daten) aufweist, die sich auf einen Dienst und eine Dienstkomponente beziehen, wobei die SI-Daten in einem schnellen Informationskanal ("Fast Information Channel" - FIC) enthalten sind, wobei die Datenstruktur aufweist:
ein Ereigniskennungsfeld (EvtId-Feld) zum Identifizieren eines Ereignisses, wobei der Begriff Ereignis ein sich zeitlich änderndes Rundfunkprogramm angibt,
wobei das EvtId-Feld in einem "FIG 0/20"-Feld (Fast Information Group, Typ 0 Field for Extension 20) und einem "FIG 1/4"-Feld (Fast Information Group, Typ 1 Field for Extension 4) der SI-Daten enthalten ist,
wobei, falls ein "F2"-Feld des "FIG 0/20"-Felds auf "0" gesetzt ist, das entsprechende "ZEIT"-Feld des "FIG 0/20"-Felds die Anfangszeit des Ereignisses aufzeichnet, wobei, falls das "F2"-Feld auf "1" gesetzt ist, das "ZEIT"-Feld die Endzeit des Ereignisses aufzeichnet, und
wobei das "Zeichen"-Feld des "FIG 1/4"-Felds den Titel des Ereignisses aufzeichnet.

2. Verfahren zum Empfangen eines digitalen Rundfunksignals, das einen Hauptdienstkanal ("Main Service Channel" - MSC) und einen schnellen Informationskanal FIC aufweist, wobei der FIC Dienstinformationsdaten (SI-Daten) aufweist, die sich auf einen Dienst und eine Dienstkomponente beziehen, wobei das Verfahren folgende Schritte aufweist:
a) Parsen eines "FIG 0/20"-Felds, das in den SI-Daten enthalten ist, und Erfassen einer Anfangs- oder Endzeit eines Ereignisses, wobei der Begriff Ereignis ein sich zeitlich änderndes Rundfunkprogramm angibt,
wobei das "FIG 0 / 2 0 "-Feld ein Ereigniskennungsfeld (EvtId-Feld) zum Identifizieren des Ereignisses aufweist,
wobei die Anfangszeit des Ereignisses anhand eines "ZEIT"-Felds des "FIG 0/20"-Felds erfasst wird, wenn das entsprechende "F2"-Feld des "FIG 0/20"-Felds auf "0" gesetzt wird, und
wobei die Endzeit des Ereignisses anhand des "ZEIT"-Felds erfasst wird, wenn das "F2"-Feld auf "1" gesetzt wird, und
b) Parsen eines "FIG 1/4"-Felds, das in den SI-Daten enthalten ist, und Erfassen eines Titels des Ereignisses, wobei das "FIG 1/4"-Feld das EvtId-Feld zum Identifizieren des Ereignisses aufweist, und
wobei der Titel des Ereignisses anhand des "Zeichen"-Felds des "FIG 1/4"-Felds erfasst wird.

3. Verfahren nach Anspruch 2, wobei die Dienstkomponente verschiedene Identifikationsverfahren entsprechend Stream-Modusinformationen, die einen Stream-Modus und einen Paketmodus angeben, verwendet.

4. Digitale Rundfunkempfangsvorrichtung zum Empfangen eines digitalen Rundfunksignals, das einen Hauptdienstkanal, MSC, und einen schnellen Informationskanal, FIC, aufweist, wobei der FIC Dienstinformationsdaten (SI-Daten) aufweist, die sich auf einen Dienst und eine Dienstkomponente beziehen, wobei die digitale Rundfunkvorrichtung aufweist:
einen FIC-Demultiplexer (20) zum Demultiplexieren über den FIC empfangener Daten in multiplexierte Konfigurationsinformationsdaten ("Multiplexed Configuration Information, MCI, Data"), schnelle Informationsdatenkanal-Daten ("Fast Information Data Channel, FIDC, Data") und SI-Daten, und
einen SI-Parser (60) zum Parsen eines in den SI-Daten enthaltenen "FIG 0/20"-Felds zum Erfassen einer Anfangszeit oder einer Endzeit eines Ereignisses und zum Parsen eines in den SI-Daten enthaltenen "FIG 1/4"-Felds zum Erfassen eines Titels des Ereignisses, wobei der Begriff Ereignis ein sich zeitlich änderndes Rundfunkprogramm angibt,
wobei das "FIG 0/20"-Feld und das "FIG 1/4"-Feld ein Ereigniskennungsfeld (EvtId-Feld) zum Identifizieren des Ereignisses aufweisen,
wobei die Anfangszeit des Ereignisses anhand eines "ZEIT"-Felds des "FIG 0/20"-Felds erfasst wird, wenn das entsprechende "F2"-Feld des "FIG 0/20"-Felds auf "0" gesetzt ist,
wobei die Endzeit des Ereignisses anhand des "ZEIT"-Felds erfasst wird, wenn das "F2"-Feld auf "1" gesetzt ist, und
wobei der Titel des Ereignisses anhand eines "Zeichen"-Felds des "FIG 1/4"-Felds erfasst wird.

## Revendications

1. Structure de données comprenant des données d'informations de service, SI, relatives à un service et un composant de service, les données SI étant incluses dans un canal d'information rapide, FIC, la structure de données comprenant :
un champ d'identifiant d'événement, EvtId, pour identifier un événement, dans lequel le terme événement est indicatif d'un programme de radiodiffusion variant dans le temps,
dans lequel le champ EvtId est contenu dans un champ « FIG 0/20 » (champ de groupe d'information rapide de type 0 pour extension 20) et un champ « FIG 1/4 » (champ de groupe d'information rapide de type 1 pour extension 4) des données SI,
dans lequel, si un champ « F2 » du champ « FIG 0/20 » est réglé sur « 0 », le champ « TIME » correspondant dudit champ « FIG 0/20 » enregistre l'heure de début de l'événement, dans lequel, si le champ « F2 » est réglé sur « 1 », le champ « TIME » enregistre l'heure de fin de l'événement, et
dans lequel le champ « Character » du champ « FIG 1/4 » enregistre le titre de l'événement.

2. Procédé de réception d'un signal de radiodiffusion numérique comprenant un canal de service principal, MSC, et un canal d'information rapide, FIC, le FIC comprenant des données d'informations de service, SI, relatives à un service et un composant de service, le procédé comprenant les étapes suivantes :
a) analyse syntaxique d'un champ « FIG 0/20 » inclus dans les données SI et la détection d'une heure de début ou de fin d'un événement, dans laquelle le terme événement est indicatif d'un programme de radiodiffusion variant dans le temps, dans laquelle le champ « FIG 0/20 » comprend un champ d'identifiant d'événement, EvtId, pour identifier l'événement,
dans laquelle l'heure de début de l'événement est détectée à partir d'un champ « TIME » du champ « FIG 0/20 » lorsque le champ « F2 » correspondant dudit champ « FIG 0/20 » est réglé sur « 0 », et
dans laquelle l'heure de fin de l'événement est détectée à partir du champ « TIME » lorsque le champ « F2 » est réglé sur « 1 » ; et
b) analyse syntaxique d'un champ « FIG 1/4 » inclus dans les données SI et la détection d'un titre de l'événement,
dans laquelle le champ « FIG 1/4 » comprend le champ EvtId pour identifier l'événement, et
dans laquelle le titre de l'événement est détecté à partir du champ « Character » du champ « FIG 1/4 ».

3. Procédé selon la revendication 2, dans lequel le composant de service utilise des procédés d'identification différents en fonction d'informations de mode de flux indicatives d'un mode de flux et d'un mode de paquet.

4. Appareil de réception de radiodiffusion numérique pour recevoir un signal de radiodiffusion numérique comprenant un canal de service principal, MSC, et un canal d'information rapide, FIC, le FIC comprenant des données d'informations de service, SI, relatives à un service et un composant de service, l'appareil de radiodiffusion numérique comprenant :
un démultiplexeur de FIC (20) pour démultiplexer des données reçues par le biais du FIC en données d'informations de configuration multiplexées, MCI, en données de canal de données d'information rapide, FIDC, et en données SI ; et
un analyseur syntaxique de SI (60) pour effectuer l'analyse syntaxique d'un champ « FIG 0/20 » inclus dans les données SI pour détecter une heure de début ou une heure de fin d'un événement et l'analyse syntaxique d'un champ « FIG 1/4 » inclus dans les données SI pour détecter un titre de l'événement, dans lequel le terme événement est indicatif d'un programme de radiodiffusion variant dans le temps, dans lequel le champ « FIG 0/20 » et le champ « FIG 1/4 » comprennent un champ d'identifiant d'événement, EvtId, pour identifier l'événement,
dans lequel l'heure de début de l'événement est détectée à partir d'un champ « TIME » du champ « FIG 0/20 » lorsque le champ « F2 » correspondant dudit champ « FIG 0/20 » est réglé sur « 0 »,
dans lequel l'heure de fin de l'événement est détectée à partir du champ « TIME » lorsque le champ « F2 » est réglé sur « 1 », et
dans lequel le titre de l'événement est détecté à partir du champ « Character » du champ « FIG 1/4 ».
